# FASCICULE DE BREVET EUROPEEN

(11) **EP 3 711 835 B1**
(45) Date de publication et mention de la délivrance du brevet: **08.02.2023**
(21) Numéro de dépôt: 20161119.1
(22) Date de dépôt: 05.03.2020
(51) Int. Cl.: B01D 21/00, B01D 21/02, H05H 1/42, B01D 21/24

(54) **BAC DE DECANTATION POUR LE TRAITEMENT D'EAU CHARGEE DE MATIERE EN SUSPENSION**
ABSETZBECKEN FÜR DIE BEHANDLUNG VON MIT SCHWEBSTOFFEN BELASTETEM WASSER
SETTLING TANK FOR THE TREATMENT OF WATER LOADED WITH SUSPENDED MATTER

(30) Priorité: 21.03.2019 FR 1902930
(43) Date de publication de la demande: 23.09.2020
(73) Titulaire: Charpentier, Michel, 30130 Pont Saint Esprit (FR)
(72) Inventeur: Charpentier, Michel, 30130 Pont Saint Esprit (FR)
(74) Mandataire: IP Trust

(56) Documents cités:
- CN-A- 108 854 170
- DE-U1-202009 007 728
- GB-A- 2 018 235
- US-A- 4 563 280
- US-A1- 2008 111 096
- US-A1- 2018 104 622

## Description

### Domaine technique

La présente invention concerne un bac de décantation pour le traitement d'eau chargée de matière en suspension.

On connaît déjà des documents de brevet CN-108854170, GB-2018235, US-2018/0104622 et US-2008/0111096 des bacs de décantation pour le traitement d'eau chargée de matière en suspension dans le domaine du recyclage de déchets résultant de la fabrication de produits en amiante-ciment ou encore dans le domaine du pétrole et du gaz pour la séparation de l'huile des autres matières.

Le domaine préférentiel d'application de l'invention est celui de l'industrie du béton qui produit de l'eau chargée de matière en suspension. Il s'agit de séparer les matières en suspension de la plus grande partie de l'eau dans laquelle elles sont incorporées, ceci pour les réutiliser dans la chaîne de fabrication du béton.

Les différents équipements connus pour traiter ou recycler les eaux chargées de matières en suspension issues des procédés de fabrication et transport du béton sont techniquement complexes et présentent des coûts de fonctionnement élevés, qu'il s'agisse de presses à boues, de bassins agitateurs ou bien de systèmes de mise en décharge après séchage.

Dans la plupart des cas, les installations de traitement des retours béton et des eaux chargées consistent à : séparer les particules de différentes tailles au moyen de vis de séparation, roues à aubes, tapis extracteurs ou laveuses de matériaux ; ainsi, le sable et les graviers sont facilement récupérés et réutilisés, transférer les eaux chargées en matières en suspension (particules fines de diamètre inférieur à 200/300 microns) dans un bassin agité en permanence afin d'éviter la décantation des matières en suspension (ciment, filler et sable), et réutiliser cette eau chargée dans le procédé de fabrication du béton (eau de gâchage ou de nettoyage des équipements), ou bien filtrer cette eau chargée (filtration avec une presse à boue pour former des « gâteaux ») pour obtenir après séchage des ultimes déchets compatibles avec les filières d'élimination actuelles, répandre sur une surface plane les retours béton et, lorsqu'ils sont secs, les concasser.

Dans les deux cas de traitement des eaux chargées, réutilisation ou filtration, on rencontre les problèmes suivants.

Lors de la réutilisation dans le processus de fabrication, le volume des eaux chargées est nettement supérieur à la consommation nécessaire pour la fabrication du béton.

Lors de l'utilisation de l'eau chargée dans le nettoyage des équipements ou le lavage des granulats recyclés, les matières en suspension forment après séchage un dépôt qui devient préjudiciable au fonctionnement et à l'esthétique.

Les résidus obtenus après filtration sont des déchets qu'il convient d'évacuer alors qu'ils contiennent des matières nobles : ciment, filler calcaire, sable fin.

La présente invention a ainsi pour objet le traitement des eaux chargées produites par l'industrie du béton.

Selon l'invention, un bac de décantation pour le traitement d'eau chargée de matière en suspension, par sédimentation naturelle en eau stagnante dans le bac sous l'effet de la pesanteur, est caractérisé en ce qu'il se présente comme une benne inclinable de forme parallélépipédique rectangle dont le sommet est ouvert et comprenant un fond, une face d'inclinaison et une face de récupération opposée à la face d'inclinaison, en ce qu'il comprend un organe d'inclinaison du bac prévu pour déplacer verticalement ladite face d'inclinaison de façon à incliner le fond du bac d'un certain angle par rapport au sol horizontal, en ce qu'il est prévu sur ladite face de récupération au moins deux vannes d'extraction situées l'une au-dessus de l'autre et sensiblement au-dessus du fond du bac et en ce qu'au moins une vis sans fin est prévue à la base de ladite face de récupération et parallèlement à celle-ci, cette vis sans fin comprenant des moyens pour approvisionner une vanne de vidange agencée sur le fond de ce bac de décantation.

Ainsi, après décantation, on récupère environ 80% d'eau claire qui peut être réutilisée dans le processus de fabrication du béton ou pour le nettoyage des équipements sans dépôt. Avec les vannes d'extraction situées l'une au-dessus de l'autre, on évite d'agiter l'eau avant sa récupération.

Avec la vis sans fin, on récupère environ 20% d'eau boueuse avec une siccité de 30% à 40% de matière en suspension qui peut être incorporée dans la fabrication du béton. Par siccité, on entend la concentration de matière sèche dans la boue.

Le bac de décantation selon l'invention peut présenter les particularités suivantes.

L'organe d'inclinaison peut être un vérin qui prend appui sur le sol.

Lesdites vannes d'extraction peuvent figurer dans l'axe médian verticale de ladite face de récupération.

Lesdites vannes d'extraction peuvent avoir un diamètre nominal de 120mm et la vanne d'extraction la plus proche du fond du bac peut être située à 500mm du fond du bac.

Ladite vis sans fin peut avoir un diamètre de 300 à 500mm et une vitesse de rotation allant de 0 à 90 tours/minute.

Le bac peut comprendre deux vis sans fin entre lesquelles est disposée ladite vanne de vidange.

Le bac peut présenter un volume de 60 à 80m³ et une hauteur d'environ 3 mètres.

L'invention s'étend à un procédé de traitement et de recyclage d'eaux chargées de matière en suspension issues des procédés de fabrication et de transport du béton, qui permet de récupérer la totalité de la boue en inclinant le bac selon l'invention.

Ce procédé consiste (a) à envoyer les eaux chargées dans un bac inclinable tel que défini ci-dessus placé en position horizontale de chargement avec les vannes d'extraction et la vanne de vidange en position fermée, (b) attendre la sédimentation complète dans le fond du bac par décantation naturelle des eaux chargées de matière en suspension, (c) ouvrir la vanne d'extraction la plus haute du bac pour soutirer l'eau clair du bac et ensuite la vanne d'extraction en dessous et ainsi de suite jusqu'à la vanne d'extraction la plus basse, (d) incliner le bac en actionnant l'organe d'inclinaison et soutirer le reste de l'eau claire par ladite vanne d'extraction la plus basse, (e) fermer toutes les vannes d'extraction, (f) incliner encore plus le bac en actionnant l'organe d'inclinaison, (g) ouvrir la vanne de vidange et actionner ladite vis sans fin pour vidanger l'eau boueuse dans le fond du bac incliné.

Ce procédé peut présenter en outre les particularités suivantes.

On attend entre 6 et 12 heures pour obtenir la sédimentation complète dans le fond du bac.

A l'étape (d) on incline le bac, au maximum avec un angle de 14°, pour soutirer le reste de l'eau claire et à l'étape (f) on incline le bac à son angle maximal compris entre 30 et 45°.

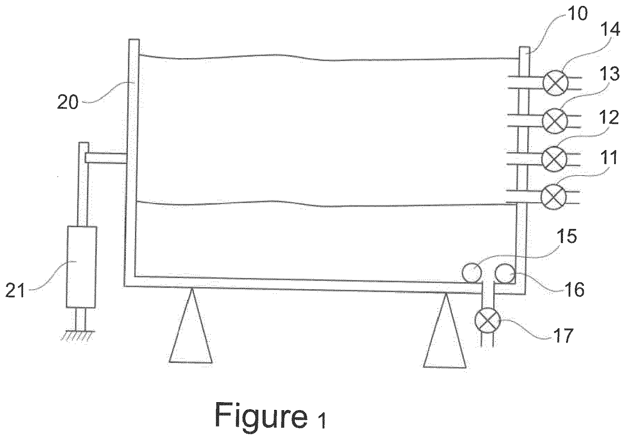

La présente invention apparaîtra maintenant avec plus de détails dans le cadre de la description qui suit d'un exemple de réalisation donné à titre illustratif en se référant à l'unique figure 1 annexée qui représente un schéma en coupe d'un bac de décantation selon l'invention.

En référence à la figure 1, le bac de décantation se présente comme un parallélépipède rectangle dont le sommet est ouvert. Sur la face située à droite dans la figure 1, la face de récupération 10, sont agencées dans la cas présent une première 11, une deuxième 12, une troisième 13 et une quatrième 14 vannes d'extraction. Ces vannes sont alignées verticalement au centre de la face de récupération 10.

Au fond du bac, à proximité de la face de récupération 10 et parallèlement à celle-ci, sont agencées deux vis sans fin 15, 16. Au niveau de la séparation de ces deux vis, figure une vanne de vidange 17.

Sur la face opposée à la face de récupération 10, la face d'inclinaison 20, est fixé un vérin 21 qui prend appui sur le sol et qui se déplace verticalement. Il permet d'incliner le bac pour former un angle d'inclinaison entre le sol et le fond du bac qui peut atteindre 45°.

A titre d'exemple numérique, le bac présente un volume de 60 à 80 m³ et sa hauteur avoisine 3 mètres. On comparera avantageusement ce bac à une benne céréalière de semi-remorque. Les quatre vannes d'extraction 11, 12, 13, 14 qui figurent donc sur l'axe médian vertical de la face de récupération 10 présentent un diamètre nominal de 120 mm et sont agencées avec un entraxe de 300 mm, la première vanne 11 étant située à 500 mm du fond du bac. On a prévu quatre vannes dans le cas présent mais leur nombre importe peu pour la mise en oeuvre de l'invention. De même, on a prévu deux vis sans fin mais une seule pourrait suffire, là encore le nombre importe peu. Les vis sans fin ont un diamètre compris entre 150 et 300 mm et leur vitesse de rotation obtenue par un entraînement hydraulique varie de 0 à 90 tours/minute.

Il convient maintenant d'aborder le fonctionnement du bac objet de la présente invention.

Durant la journée de travail tous les retours béton et toutes les eaux chargées issues du nettoyage des véhicules et de la centrale à béton sont criblés pour séparation des plus gros éléments : sables et graviers d'un diamètre supérieur à 200/300 microns. Les eaux chargées issues du criblage présentent donc des matières en suspension d'un diamètre inférieur à 200/300 microns et elles sont envoyées dans le bac de décantation placé en position horizontale de chargement.

Dès que l'eau chargée devient stagnante, la décantation naturelle s'opère sous l'effet de la pesanteur. Les éléments les plus petits ont une vitesse sédimentation de l'ordre de 40 cm/heure. La sédimentation est complète entre 6 et 12 heures. A l'issue de cette sédimentation, on dispose de deux composants séparés par un plan horizontal. Sur le dessus, l'eau claire est chimiquement polluée avec un pH basique de 12 environ mais elle ne présente pas de matière solide. En dessous de l'eau claire figure une eau boueuse constituée de 55% à 80% d'eau et présentant donc une siccité de 20% à 45%.

Le soutirage de l'eau claire se fait par gravité en actionnant les vannes d'extraction de la plus haute 14 à la plus basse 11 afin de ne pas créer de turbulences remettant en suspension une partie des particules fines décantées. Lorsqu'il reste une faible quantité d'eau claire au-dessus de l'eau boueuse, on incline légèrement le bac de quelques degrés, 14 degrés maximum. L'inclinaison doit être faible car, suivant sa siccité l'eau boueuse colle plus ou moins au fond du bac et peut se mélanger à l'eau claire. On soutire alors le reste de l'eau claire. L'eau claire soutirée peut être stockée indifféremment dans des bassins ou citernes de reprise. Elle pourra être utilisée pour : la fabrication du béton, le nettoyage des équipements de la centrale à béton, le nettoyage des véhicules de transport et de pompage du béton, l'alimentation de la recycleuse des granulats et de son crible.

Une fois que toute l'eau claire est soutirée, on referme les quatre vannes d'extraction 11, 12, 13, 14.

On peut alors vidanger l'eau boueuse en actionnant les vis sans fin 15, 16 et en ouvrant la vanne de vidange 17. L'inclinaison du bac à son angle maximal (30° à 45°) permet de le vidanger complètement.

Les avantages de la présente invention sont les suivants : suppression des curages périodiques des bassins de décantation traditionnels, suppression des déchets de curage et des coûts de traitement ou mise en décharge associés, réutilisation complète de l'eau claire dans toutes les configurations d'exploitation de la centrale à béton, régulation de la siccité de l'eau boueuse malgré les variations de matières solides apportées par les eaux chargées.

On comprendra qu'avec le bac inclinable selon l'invention, l'eau peut être stagnante pendant plusieurs heures mais le processus de sédimentation est naturel et donc peu onéreux à mettre en oeuvre. La dernière eau claire est récupérée sans turbulence avant la récupération des boues qui se fait en position inclinée du bac. La ou les vis sans fin servent à brasser ces boues lorsque le bac est incliné pour récupérer la matière par la vanne de fond.

L'exemple de réalisation de l'invention présenté ci-dessus a été choisi eu égard à son caractère concret. Il ne serait cependant pas possible de répertorier de manière exhaustive tous les modes de réalisation qui sont couverts sans sortir du cadre des revendications.

## Revendications

1. Bac de décantation pour le traitement d'eau chargée de matière en suspension, par sédimentation naturelle en eau stagnante dans le bac sous l'effet de la pesanteur, **caractérisé en ce qu'**il se présente comme une benne inclinable de forme parallélépipédique rectangle dont le sommet est ouvert et comprenant un fond, une face d'inclinaison (20) et une face de récupération (10) opposée à la face d'inclinaison, **en ce qu'**il comprend un organe d'inclinaison du bac (21) prévu pour déplacer verticalement ladite face d'inclinaison de façon à incliner le fond du bac d'un certain angle par rapport au sol horizontal, **en ce qu'**il est prévu sur ladite face de récupération au moins deux vannes d'extraction (11,12,13,14) situées l'une au-dessus de l'autre et sensiblement au-dessus du fond du bac et **en ce qu'**au moins une vis sans fin (15,16) est prévue à la base de ladite face de récupération (10) et parallèlement à celle-ci, cette vis sans fin comprenant des moyens pour approvisionner une vanne de vidange (17) agencée sur le fond de ce bac de décantation.

2. Bac de décantation selon la revendication 1, **caractérisé en ce que** l'organe d'inclinaison (21) est un vérin qui prend appui sur le sol.

3. Bac de décantation selon la revendication 1 ou 2, **caractérisé en ce que** lesdites vannes d'extraction (11,12,13,14) figurent dans l'axe médian verticale de ladite face de récupération (10).

4. Bac de décantation selon l'une des revendications précédentes, **caractérisé en ce que** lesdites vannes d'extraction (11,12,13,14) ont un diamètre nominal de 120mm et **en ce que** la vanne d'extraction (11) la plus proche du fond du bac est située à 500mm du fond du bac.

5. Bac de décantation selon l'une des revendications précédentes, **caractérisé en ce que** ladite vis sans fin (15,16) a un diamètre de 300 à 500mm et une vitesse de rotation allant de 0 à 90 tours/minute.

6. Bac de décantation selon l'une des revendications précédentes, **caractérisé en ce qu'**il comprend deux vis sans fin (15,16) entre lesquelles est disposée ladite vanne de vidange (17).

7. Bac de décantation selon l'une des revendications précédentes, caractérisé en qu'il présente un volume de 60 à 80m³ et une hauteur d'environ 3 mètres.

8. Procédé de traitement et de recyclage d'eaux chargées de matière en suspension issues des procédés de fabrication et de transport du béton, **caractérisé en ce qu'**il consiste (a) à envoyer les eaux chargées de matière en suspension dans un bac inclinable selon la revendication 1 placé en position horizontale de chargement avec les vannes d'extraction et la vanne de vidange en position fermée, (b) attendre la sédimentation complète dans le fond du bac par décantation naturelle des eaux chargées de matière en suspension, (c) ouvrir la vanne d'extraction la plus haute du bac pour soutirer l'eau clair du bac et ensuite la vanne d'extraction en dessous et ainsi de suite jusqu'à la vanne d'extraction la plus basse, (d) incliner le bac en actionnant l'organe d'inclinaison et soutirer le reste de l'eau claire par ladite vanne d'extraction la plus basse, (e) fermer toutes les vannes d'extraction, (f) incliner encore plus le bac en actionnant l'organe d'inclinaison, (g) ouvrir la vanne de vidange et actionner ladite vis sans fin pour vidanger l'eau boueuse dans le fond du bac incliné.

9. Procédé selon la revendication 8, **caractérisé en ce que** on attend entre 6 et 12 heures pour obtenir la sédimentation complète dans le fond du bac.

10. Procédé selon l'une des revendications 8 ou 9, **caractérisé en ce que** à l'étape (d) on incline le bac, au maximum avec un angle de 14°, pour soutirer le reste de l'eau claire et à l'étape (f) on incline le bac à son angle maximal compris entre 30 et 45°.

## Patentansprüche

1. Absetzbecken für die Behandlung von mit Schwebstoffen beladenem Wasser durch natürliche Sedimentation in stehendem Wasser in dem Becken unter der Einwirkung der Schwerkraft, **dadurch gekennzeichnet, dass** es als neigbarer Großbehälter mit rechteckiger Parallelepipedform erscheint, dessen Oberseite offen ist und umfassend einen Boden, eine Neigungsfläche (20) und eine Rückgewinnungsfläche (10) gegenüber der Neigungsfläche, dass es ein Beckenneigungselement (21) umfasst, das zum vertikalen Bewegen der Neigungsfläche vorgesehen ist, um den Boden des Beckens um einen bestimmten Winkel relativ zu dem horizontalen Grund zu neigen, dass auf der Rückgewinnungsfläche mindestens zwei Entnahmeventile (11, 12, 13, 14) vorgesehen sind, die übereinander und im Wesentlichen über dem Boden des Beckens gelegen sind, und dass mindestens eine Schnecke (15, 16) an der Basis der Rückgewinnungsfläche (10) und parallel dazu vorgesehen ist, diese Schnecke umfassend Mittel zum Versorgen eines Ablassventils (17), das an dem Boden dieses Absetzbeckens eingerichtet ist.

2. Absetzbecken nach Anspruch 1, **dadurch gekennzeichnet, dass** das Neigungselement (21) ein Zylinder ist, der auf dem Grund aufliegt.

3. Absetzbecken nach Anspruch 1 oder 2, **dadurch gekennzeichnet, dass** die Entnahmeventile (11, 12, 13, 14) in der vertikalen Mittelachse der Rückgewinnungsfläche (10) sind.

4. Absetzbecken nach einem der vorstehenden Ansprüche, **dadurch gekennzeichnet, dass** die Entnahmeventile (11,12,13,14) einen Nenndurchmesser von 120 mm aufweisen und dass das Entnahmeventil (11), das dem Boden des Beckens am nächsten ist, 500 mm von dem Boden des Beckens gelegen ist.

5. Absetzbecken nach einem der vorstehenden Ansprüche, **dadurch gekennzeichnet, dass** die Schnecke (15, 16) einen Durchmesser von 300 bis 500 mm und eine Rotationsgeschwindigkeit von 0 bis 90 Umdrehungen/Minute aufweist.

6. Absetzbecken nach einem der vorstehenden Ansprüche, **dadurch gekennzeichnet, dass** es zwei Schnecken (15, 16) umfasst, zwischen denen das Ablassventil (17) angeordnet ist.

7. Absetzbecken nach einem der vorstehenden Ansprüche, **dadurch gekennzeichnet, dass** es ein Volumen von 60 bis 80 m³ und eine Höhe von etwa 3 Metern vorweist.

8. Verfahren zum Aufbereiten und zum Wiederverwerten von Wasser, das mit Schwebstoffen beladen ist, das aus Verfahren zum Herstellen und zum Transportieren von Beton stammt, **dadurch gekennzeichnet, dass** es darin besteht, (a) das Wasser, das mit Schwebstoffen beladen ist, in ein neigbares Becken nach Anspruch 1 zu befördern, das in horizontaler Beladeposition mit den Entnahmeventilen und dem Ablassventil in geschlossener Position platziert ist, (b) die vollständige Sedimentation in dem Boden des Beckens durch natürliches Absetzen des Wassers abzuwarten, das mit Schwebstoffen beladen ist, (c) das oberste Entnahmeventil des Beckens zum Abziehen des Klarwassers aus dem Becken und dann das Entnahmeventil darunter und so weiter bis zu dem untersten Entnahmeventil zu öffnen, (d) das Becken durch Betätigen des Neigungselements zu neigen und den Rest des Klarwassers durch das unterste Entnahmeventil abzuziehen, (e) alle Entnahmeventile zu schließen, (f) das Becken durch Betätigen des Neigungselements noch weiter zu neigen, (g) das Ablassventil zu öffnen und die Schnecke zum Ablassen des Schmutzwassers in dem Boden des geneigten Beckens zu betätigen.

9. Verfahren nach Anspruch 8, **dadurch gekennzeichnet, dass** man zum Erhalten der vollständigen Sedimentation in dem Boden des Beckens zwischen 6 und 12 Stunden wartet.

10. Verfahren nach einem der Ansprüche 8 oder 9, **dadurch gekennzeichnet, dass** in Schritt (d) das Becken zum Abziehen des Rests des Klarwassers um einen Winkel von maximal 14° geneigt wird und in Schritt (f) das Becken auf seinen maximalen Winkel zwischen 30 und 45° geneigt wird.

## Claims

1. Settling tank for treating water laden with suspended matter, by natural sedimentation in stagnant water in the tank under the effect of gravity, **characterized in that** said tank is a tiltable bucket of rectangular parallelepipedal shape, the top of which is open, and comprising a bottom, a tilting face (20) and a recovery face (10) opposite the tilting face, and **in that** said tank comprises a tank tilting member (21) provided for vertically moving said tilting face so as to tilt the bottom of the tank by a certain angle relative to the horizontal ground, and **in that** at least two draw-off valves (11, 12, 13, 14) are provided on said recovery face and are located one above the other and substantially above the bottom of the tank, and **in that** at least one endless screw (15, 16) is provided at the base of said recovery face (10) and parallel thereto, said endless screw comprising means for supplying a drain valve (17) arranged on the bottom of said settling tank.

2. Settling tank according to claim 1, **characterized in that** the tilting member (21) is a cylinder which is supported on the ground.

3. Settling tank according to either claim 1 or claim 2, **characterized in that** said draw-off valves (11, 12, 13, 14) are located along the vertical median axis of said recovery face (10).

4. Settling tank according to any of the preceding claims, **characterized in that** said draw-off valves (11, 12, 13, 14) have a nominal diameter of 120 mm and **in that** the draw-off valve (11) closest to the bottom of the tank is located 500 mm from the bottom of the tank.

5. Settling tank according to any of the preceding claims, **characterized in that** said endless screw (15, 16) has a diameter of from 300 to 500 mm and a rotational speed ranging from 0 to 90 revolutions/minute.

6. Settling tank according to any of the preceding claims, **characterized in that** it comprises two endless screws (15, 16) with said drain valve (17) arranged therebetween.

7. Settling tank according to any of the preceding claims, **characterized in that** it has a volume of from 60 to 80 m³ and a height of approximately 3 meters.

8. Method for treating and recycling water laden with suspended matter, resulting from processes related to producing and transporting concrete, **characterized in that** said method consists in (a) transferring the water laden with suspended matter into a tiltable tank according to claim 1, arranged in a horizontal filling position with the draw-off valves and the drain valve in a closed position, (b) waiting for the sedimentation process to complete at the bottom of the tank by the natural settling of the water laden with suspended matter, (c) opening the uppermost draw-off valve in the tank to draw off the clear water from the tank, and next the draw-off valve therebelow and so on until the lowermost draw-off valve, (d) tilting the tank by actuating the tilting member and drawing off the remaining clear water via said lowermost draw-off valve, (e) closing all the draw-off valves, (f) tilting the tank even more by actuating the tilting member, (g) opening the drain valve and actuating said endless screw for draining the muddy water at the bottom of the tilted tank.

9. Method according to claim 8, **characterized in that** there is a wait time of between 6 and 12 hours for the sedimentation process to complete at the bottom of the tank.

10. Method according to either claim 8 or claim 9, **characterized in that** in step (d) the tank is tilted at most by an angle of 14° for drawing off the remaining clear water, and in step (f) the tank is tilted to its maximum angle of between 30 and 45°.
